# DEMANDE DE BREVET EUROPEEN

(11) **EP 1 369 276 A1**
(43) Date de publication de la demande: **10.12.2003**
(21) Numéro de dépôt: 03291312.1
(22) Date de dépôt: 02.06.2003
(51) Int. Cl.: B60J 7/04, B60J 1/18, B62D 25/10, B60J 5/10, B60J 7/047

(54) **Dispositif formant volet de coffre arrière d'un véhicule automobile**

(30) Priorité: 07.06.2002 FR 0207020
(71) Demandeur: Peugeot Citroen Automobiles SA, 92200 Neuilly sur Seine (FR)
(72) Inventeur: Calvet, Frédéric, 92500 Rueil-Malmaison (FR); Devaux, Daniel, 77183 Croissy-Beaubourg (FR)
(74) Mandataire: Thinat, Michel

(57) **Abrégé**

La présente invention concerne un dispositif formant volet de coffre arrière d'un véhicule automobile.

Le dispositif est caractérisé en ce que la vitre arrière (7) surmontant le volet arrière 1 est montée pivotante relativement au véhicule entre une position de fermeture du coffre arrière en prolongement du volet fermé (1) et une position d'ouverture approximativement en prolongement du pavillon du véhicule pour libérer l'espace au-dessus du volet fermé (1).

L'invention trouve application dans le domaine de l'automobile.

## Description

La présente invention concerne un dispositif formant volet de coffre arrière d'un véhicule automobile.

On connaît l'utilisation du hayon en tant que volet de fermeture du coffre arrière d'un véhicule automobile.

Cependant, cette configuration connue du volet arrière a pour inconvénient majeur de nécessiter l'ouverture complète du hayon pour déposer des objets dans le coffre arrière quelles que soient leurs dimensions.

La présente invention a pour but d'éliminer l'inconvénient ci-dessus en proposant un dispositif formant volet de coffre arrière d'un véhicule automobile permettant la dépose d'objets dans le coffre arrière sans être obligé d'ouvrir complètement le volet arrière.

A cet effet, le dispositif formant volet de coffre arrière d'un véhicule automobile, équipé d'une vitre arrière pouvant être disposée au-dessus du volet arrière sensiblement en prolongement de ce volet occupant sa position de fermeture du coffre arrière, est caractérisé en ce que la vitre arrière est montée pivotante à la partie arrière du pavillon du véhicule suivant un axe transversal à ce dernier à l'opposé du volet et peut pivoter entre sa position de fermeture du coffre arrière en prolongement du volet fermé et une position d'ouverture approximativement en prolongement du pavillon permettant de libérer l'espace au-dessus du volet fermé pour accéder au coffre arrière.

Avantageusement, la vitre arrière peut coulisser de façon guidée en translation le long du pavillon au-dessus de celui-ci vers l'avant du véhicule à partir de sa position d'ouverture jusqu'à une position rangée escamotée non en saillie de l'arrière du véhicule.

De préférence, la vitre arrière est montée pivotante au pavillon par l'intermédiaire de deux charnières d'articulation situées de chaque côté de la vitre et dont les axes d'articulation sont coaxiaux transversalement au véhicule, l'élément mobile de chaque charnière étant fixé à la vitre au voisinage de son bord opposé au volet arrière tandis que l'élément fixe de la charnière est équipé d'un galet de roulement logé dans un rail de guidage longitudinal latéral du pavillon pour permettre le coulissement bilatéralement guidé de la vitre arrière le long des rails de guidage.

La vitre arrière peut être bloquée relativement aux rails de guidage à sa position escamotée la plus avancée sur les rails par des moyens de verrouillage automatique.

Le pavillon est équipé d'un panneau arrière de toit ouvrant à déplacement commandé en translation et bilatéralement guidé relativement au pavillon entre une position fermée du pavillon et une position avancée sur le pavillon d'ouverture de la partie arrière du pavillon et les rails de guidage de la vitre arrière sont fixés de chaque côté du panneau arrière du toit ouvrant sous celui-ci pour permettre à la vitre arrière de coulisser relativement au panneau au-dessus de celui-ci à partir de la position d'ouverture de la vitre lorsque le panneau occupe sa position de fermeture du pavillon jusqu'à ce que la vitre arrière soit bloquée relativement au panneau à sa position avancée au-dessus de celui-ci par les moyens de verrouillage automatique.

Le panneau de toit ouvrant peut entraîner cinématiquement la vitre arrière vers l'avant du véhicule en position verrouillée de la vitre relativement au panneau lorsque ce dernier est déplacé à sa position avancée d'ouverture de la partie arrière du pavillon pour configurer partiellement le véhicule en pick-up.

Le panneau arrière de toit ouvrant est monté bilatéralement guidé sur un cadre à longerons latéraux de guidage solidaire du pavillon.

L'élément fixe de chaque charnière d'articulation de la vitre arrière est en forme de chape située au-dessus du panneau arrière de toit ouvrant et qui comporte une patte latérale externe au panneau à l'extrémité inférieure de laquelle est monté à rotation le galet de roulement logé dans son rail de guidage en-dessous du panneau de toit ouvrant.

La vitre arrière peut être verrouillée à sa position de fermeture au volet arrière fermé par un mécanisme de verrouillage déverrouillable comprenant un doigt de verrouillage solidaire de la vitre en traversant celle-ci et un boîtier de verrouillage fixé dans le volet arrière et dans lequel peut s'engager le doigt de verrouillage pour y être bloqué par un coulisseau à déplacement commandé dans le boîtier par un moteur électrique logé dans le volet arrière.

Le doigt de verrouillage est solidaire à son extrémité opposée d'une poignée externe de manoeuvre située au voisinage du bord inférieur de la vitre arrière sensiblement au milieu de celle-ci.

Le volet arrière est monté articulé à son bord inférieur à la caisse du véhicule par deux charnières espacées dont les axes d'articulation sont coaxiaux et transversaux à l'axe longitudinal du véhicule pour permettre au volet de basculer à sa position d'ouverture approximativement en prolongement du plancher du véhicule lorsque la vitre arrière est au moins à sa position d'ouverture.

Le volet arrière peut être verrouillé à sa position de fermeture à la caisse du véhicule par un mécanisme de verrouillage déverrouillable comprenant deux doigts de verrouillage solidaires respectivement des deux montants de la caisse du véhicule délimitant l'ouverture du coffre arrière en faisant saillie de ces montants et deux boîtiers de verrouillage fixés dans le volet arrière de chaque côté de celui-ci à sa partie supérieure opposée à l'articulation du volet et dans chacun desquels peut s'engager un doigt de verrouillage pour y être bloqué par un coulisseau à déplacement commandé dans le boîtier par un moteur électrique logé dans le boîtier arrière.

Deux vérins latéraux à gaz sont montés articulés entre la caisse du véhicule et la vitre arrière à ses extrémités opposées à son articulation au pavillon pour permettre le pivotement contrôlé de la vitre à sa position d'ouverture en prolongement du pavillon.

Le panneau arrière du toit ouvrant est déplaçable le long du pavillon par un moteur électrique commandé à distance et relié au panneau par des moyens d'entraînement.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en coupe dans le plan médian longitudinal de la partie arrière d'un véhicule automobile et représentant le volet arrière de l'invention en position de fermeture du coffre arrière du véhicule ;
- la figure 2 est une vue semblable à celle de la figure 1 et représentant la vitre du volet arrière en position d'ouverture d'accès au coffre arrière du véhicule ;
- la figure 3 montre le coulissement de la vitre arrière vers l'avant du véhicule à partir de sa position d'ouverture de la figure 2 jusqu'à une position surplombant un panneau arrière de toit ouvrant du véhicule occupant sa position de fermeture ;
- la figure 4 représente le déplacement vers l'avant du véhicule de l'ensemble constitué par le panneau de toit ouvrant et la vitre arrière à partir de la position représentée à la figure 3 ;
- la figure 5 correspond à la figure 4 et représente le volet arrière déverrouillé en position sensiblement horizontale ;
- la figure 6 est une vue en perspective éclatée des différents composants associés au volet arrière, à la vitre arrière et au panneau mobile du pavillon du véhicule ;
- la figure 7 est une vue en section horizontale suivant la ligne VII-VII de la figure 6 ;
- la figure 8 est une vue en section suivant la ligne VIII-VIII de la figure 23 du mécanisme de verrouillage du volet arrière à l'un des montants de la caisse du véhicule délimitant l'ouverture du coffre arrière ;
- la figure 9 est une vue en section suivant la ligne IX-IX en figure 24 et représentant l'une des charnières d'articulation de la partie inférieure du volet arrière à la caisse du véhicule ;
- la figure 10 est une vue agrandie de la partie cerclée en X de la figure 1 ;
- la figure 11 est une vue en coupe agrandie de la partie cerclée en XI de la figure 1 ;
- la figure 12 est une vue en section dans un plan vertical longitudinal passant par une charnière d'articulation de la vitre arrière au pavillon du véhicule ;
- la figure 13 est une vue en section suivant la ligne XIII-XIII de la figure 12 ;
- la figure 14 est une vue partielle en section dans le plan médian longitudinal du véhicule et représentant la vitre arrière située au-dessus du panneau du toit ouvrant lequel occupe sa position de fermeture de la partie arrière du pavillon du véhicule ;
- la figure 15 est une vue agrandie de la partie cerclée en XV de la figure 3 ;
- la figure 16 est une vue en section dans le plan médian longitudinal du véhicule et représentant l'ensemble constitué par le panneau de toit ouvrant et la vitre arrière en position la plus en avant du véhicule pour conformer ce dernier en pick-up ;
- la figure 17 est une vue en section dans un plan vertical longitudinal du véhicule passant par l'un des vérins à gaz de la vitre arrière et représentant l'ensemble constitué par le panneau de toit ouvrant de la vitre arrière à la même position qu'en figure 16 ;
- la figure 18 est une vue en section dans le plan médian longitudinal du véhicule de la partie avant du panneau de toit ouvrant en position fermée ;
- la figure 19 est une vue semblable à celle de la figure 18 et représentant la vitre arrière de volet en position au-dessus du panneau de toit ouvrant ;
- la figure 20 est une vue en section dans le plan vertical médian d'une charnière d'articulation de la vitre arrière de volet disposée au-dessus du panneau de toit ouvrant ;
- la figure 21 est une vue en section suivant la ligne XXI-XXI de la figure 20 ;
- la figure 22 est une vue en section semblable à celle de la figure 21 lorsque l'ensemble formé par le panneau de toit ouvrant et la vitre est en position la plus en avant du véhicule pour le configurer en pick-up ;
- la figure 23 est une vue en perspective du véhicule représentant le volet de coffre arrière, la vitre arrière et le panneau de toit ouvrant en position fermée ;
- la figure 24 est une vue en perspective du véhicule représentant la vitre du volet de coffre arrière en position d'ouverture d'accès au coffre arrière avec le volet arrière en position fermée ;
- la figure 25 est une vue en perspective du véhicule représentant la vitre de volet arrière en position rangée escamotée au-dessus du panneau de toit ouvrant arrière ;
- la figure 26 est une vue en perspective du véhicule représentant l'ensemble constitué par la vitre de volet arrière et le panneau de toit ouvrant en position la plus en avant du véhicule pour le configurer en pick-up ; et
- la figure 27 est une vue en perspective du véhicule représentant le volet arrière en position ouverte.

L'invention va être décrite en référence à un véhicule automobile du type à panneau arrière de toit ouvrant pouvant coulisser en translation de la partie arrière du pavillon du véhicule vers l'avant de celui-ci et à volet de fermeture du coffre arrière pouvant pivoter de sa position de fermeture à sa position d'ouverture en prolongement du plancher du coffre arrière, mais il est bien entendu qu'elle peut s'appliquer à tout autre type de véhicule tel que par exemple un véhicule à pavillon ne comportant pas de panneau mobile de toit ouvrant.

En se reportant aux figures, le véhicule automobile est équipé d'un volet 1 de fermeture du coffre arrière du véhicule et monté pivotant par son bord inférieur à la caisse du véhicule suivant une articulation transversale lui permettant de basculer de sa position de fermeture du coffre à sa position d'ouverture de celui-ci à laquelle le volet 1 se trouve approximativement dans le prolongement du plancher 2 du coffre arrière du véhicule.

Le volet 1 est formé par un panneau extérieur en tôle 3 et une doublure 4 solidaire du panneau extérieur 3 en étant tournée vers l'intérieur du coffre arrière en position fermée du volet 1.

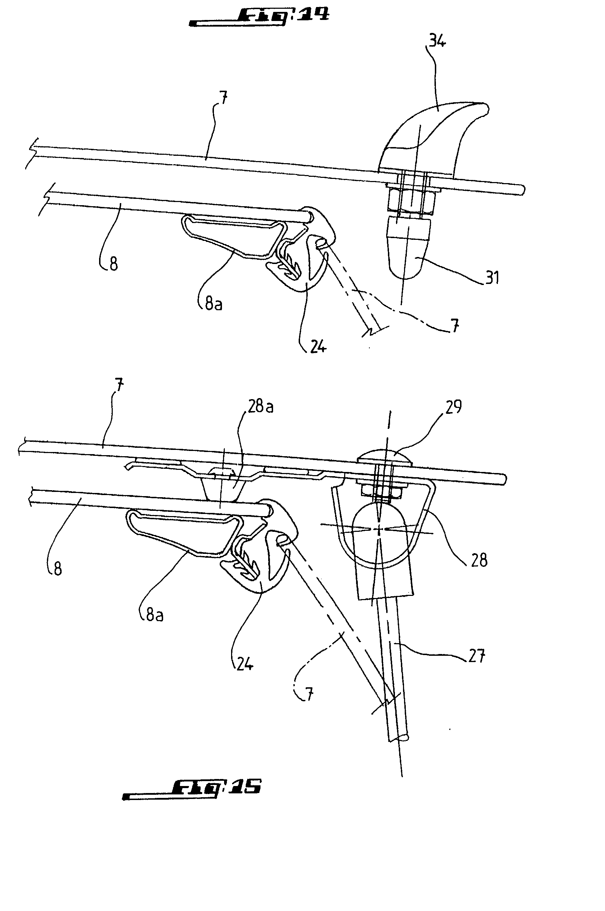

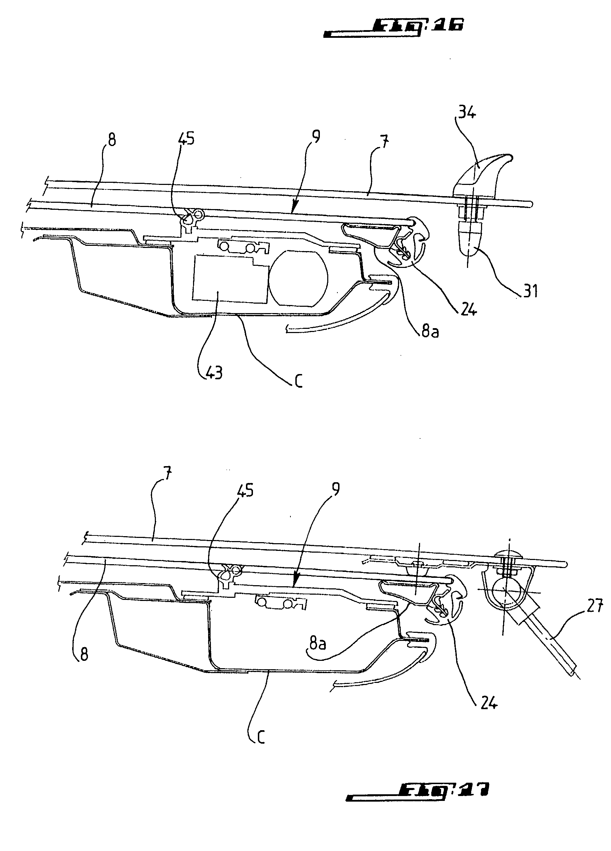

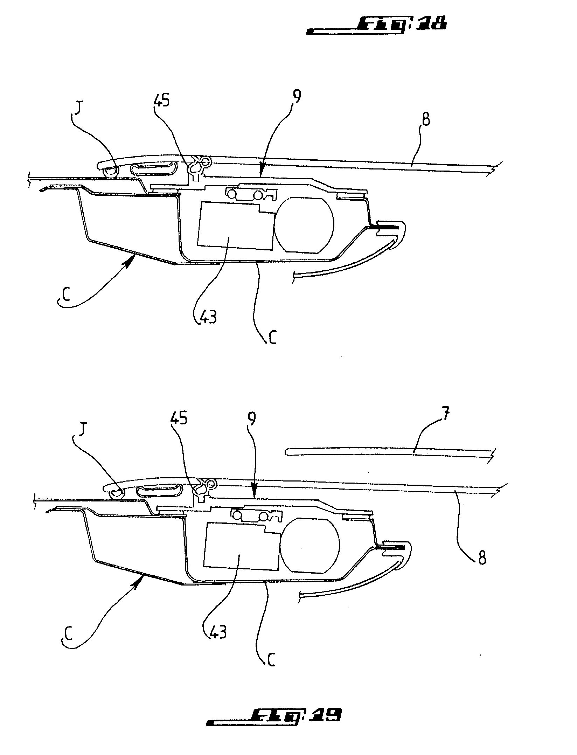

Comme représenté à la figure 9, l'articulation du volet 1 à la caisse C du véhicule est constituée par deux charnières d'articulation 5 disposées symétriquement au plan médian longitudinal du véhicule, l'élément mobile 5a de chaque charnière 5 étant fixé, par exemple par soudage ou par vissage, à une paroi d'extrémité de la doublure 4 du volet 1 tandis que l'élément fixe 5b de la charnière 5 est fixé, par exemple par soudage ou vissage, à la caisse C du véhicule sensiblement au niveau du plancher 2 du coffre arrière, les deux axes d'articulation 5c entre les deux éléments mobiles et fixes 5a et 5b des charnières 5 étant coaxiaux et s'étendant transversalement au véhicule. Un joint transversal 5d est fixé à la caisse au niveau du bord arrière transversal du coffre arrière pour assurer l'étanchéité entre la partie inférieure du volet 1 et le coffre.

Le volet arrière 1 est retenu à sa position d'ouverture par deux paires latérales de bras articulés 6 à la manière d'un compas, l'un des bras de chaque paire étant fixé par son extrémité de façon articulée au montant M de la caisse C du véhicule délimitant l'ouverture arrière du coffre tandis que l'autre bras de cette paire est fixé par son extrémité opposée à la paroi latérale correspondante de la doublure 4 sensiblement au milieu de celle-ci.

Le volet arrière 1 peut être verrouillé en position fermée à la caisse du véhicule par un mécanisme de verrouillage commandé qui sera décrit ultérieurement.

A sa position fermée, le volet arrière 1 est surmonté d'une vitre 7 permettant d'assurer une fermeture complète du coffre arrière du véhicule.

Le panneau de toit ouvrant 8, qui peut être réalisé en un matériau translucide, en matière plastique ou en tôle, est monté coulissant de façon commandée en translation sur un cadre 9 à longerons latéraux 10 et traverse 11 de liaison des longerons et solidaire du pavillon de véhicule de façon à déplacer le panneau 8 en avant ou en arrière du véhicule suivant que l'on souhaite ouvrir ou fermer la partie de pavillon arrière surplombant le coffre arrière du véhicule.

Deux barres de toit longitudinales 12 solidaires de chaque côté du pavillon du véhicule peuvent être prévues.

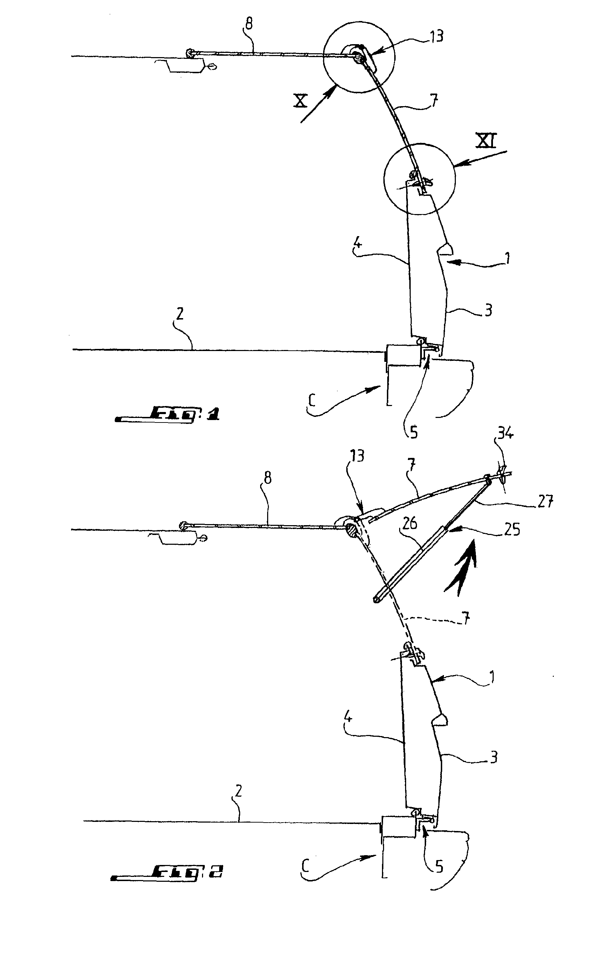

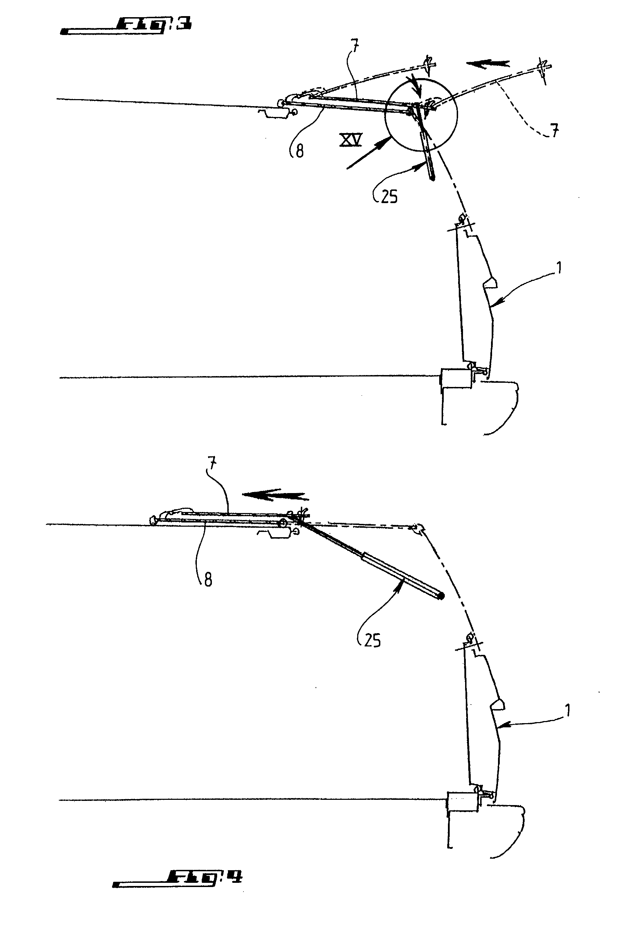

Selon l'invention, la vitre de volet 7 est montée pivotante à la partie arrière du pavillon du véhicule suivant un axe transversal au véhicule situé à l'opposé du volet arrière 1 et permettant à la vitre 7 de pivoter de sa position de fermeture, volet 1 fermé, à une position d'ouverture approximativement en prolongement du pavillon et, plus précisément en prolongement du panneau de toit ouvrant 8 lorsque celui-ci est présent, de façon à libérer l'espace au-dessus du volet fermé 1 normalement occupé par la vitre 7 afin d'accéder au coffre arrière et y déposer des objets sans être obligé d'ouvrir le volet 1, comme représenté aux figures 2 et 24.

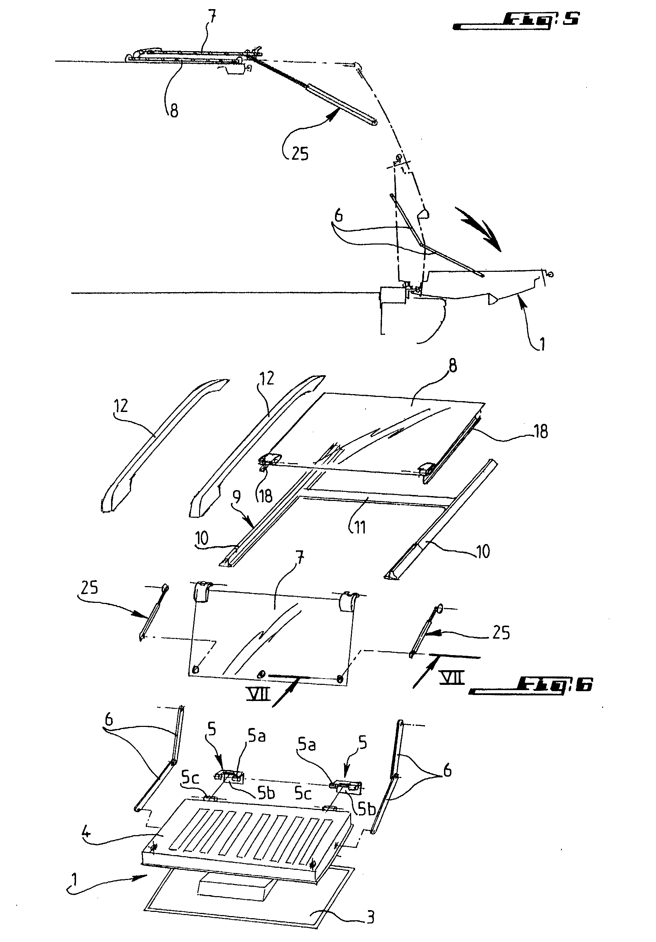

En outre, la vitre de volet 7 peut coulisser de façon guidée en translation vers l'avant du véhicule le long du pavillon au-dessus de celui-ci à partir de sa position d'ouverture jusqu'à une position rangée escamotée, c'est-à-dire ne faisant plus saillie de l'arrière du véhicule, au-dessus de la partie arrière correspondante du pavillon ou du panneau de toit ouvrant 8 lorsque présent, comme représenté aux figures 3 et 25.

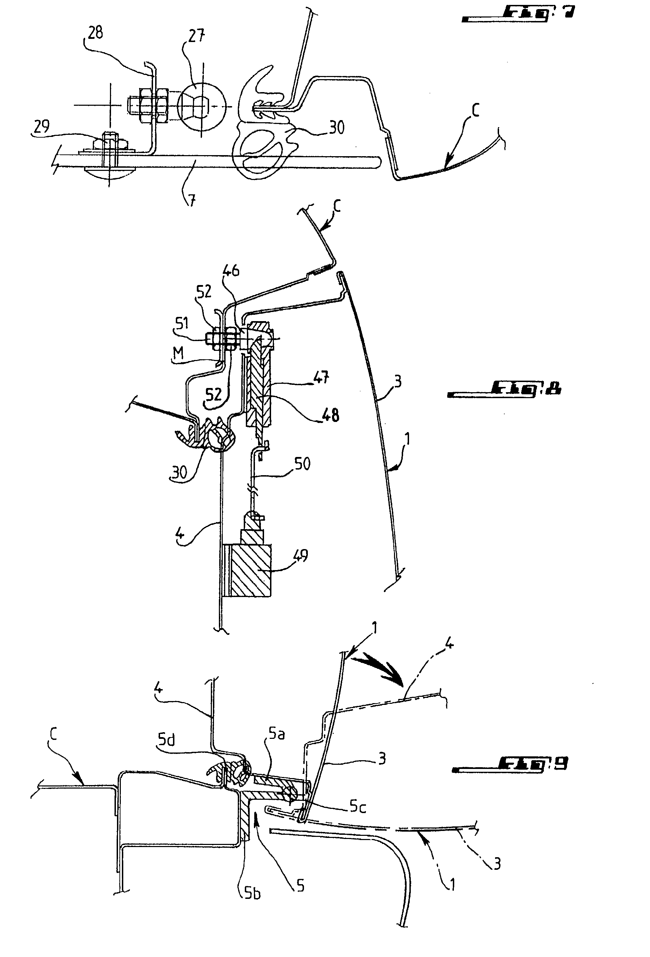

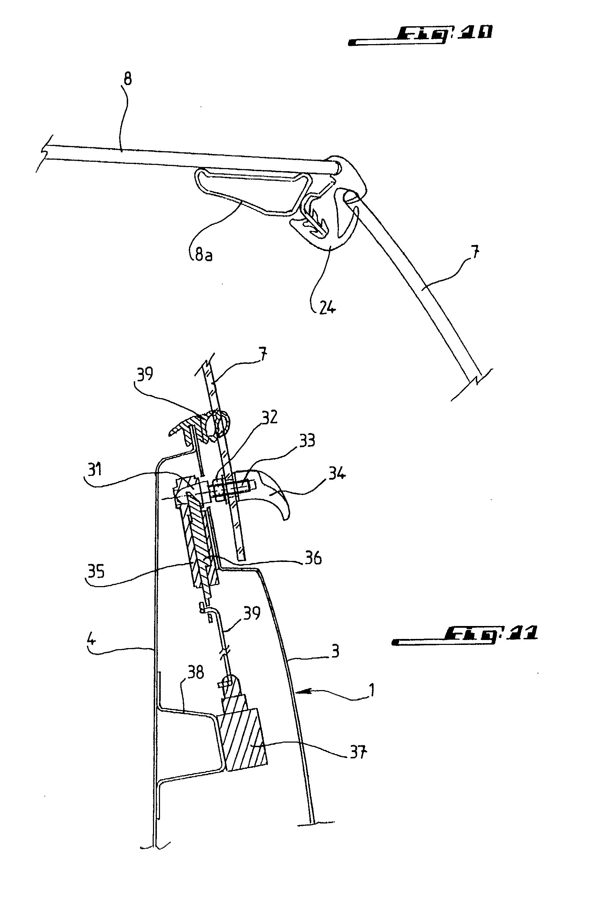

Enfin, l'entraînement commandé du panneau de toit ouvrant 8 vers l'avant du véhicule provoque le déplacement concomitant de la vitre de volet 7 verrouillée au-dessus du panneau 8 pour dégager la partie arrière du véhicule et le conformer en pick-up comme représenté aux figures 4 et 26.

La structure et le fonctionnement des différents composants du dispositif de l'invention permettant les différentes configurations ci-dessus du véhicule vont être détaillées ci-dessous.

La vitre de volet 7 est montée pivotante au pavillon du véhicule, notamment au panneau de toit ouvrant 8, par l'intermédiaire de deux charnières d'articulation 13 espacées situées de chaque côté de la vitre 7 et dont les axes d'articulation 14 sont coaxiaux transversalement au véhicule. L'élément mobile ou pivotant 15 de chaque charnière d'articulation 13 est fixé à la vitre 7 au voisinage de son bord transversal opposé au volet 1 tandis que l'élément fixe 16 de la charnière 13, par rapport auquel peut pivoter l'élément mobile 15, est monté sur le panneau de toit ouvrant 8 et équipé d'un galet de roulement 17 logé et retenu dans un rail de guidage longitudinal latéral 18 fixé en-dessous du côté latéral correspondant du panneau de toit ouvrant 8 pour permettre le coulissement bilatéralement guidé de la vitre 7 le long des rails de guidage 18.

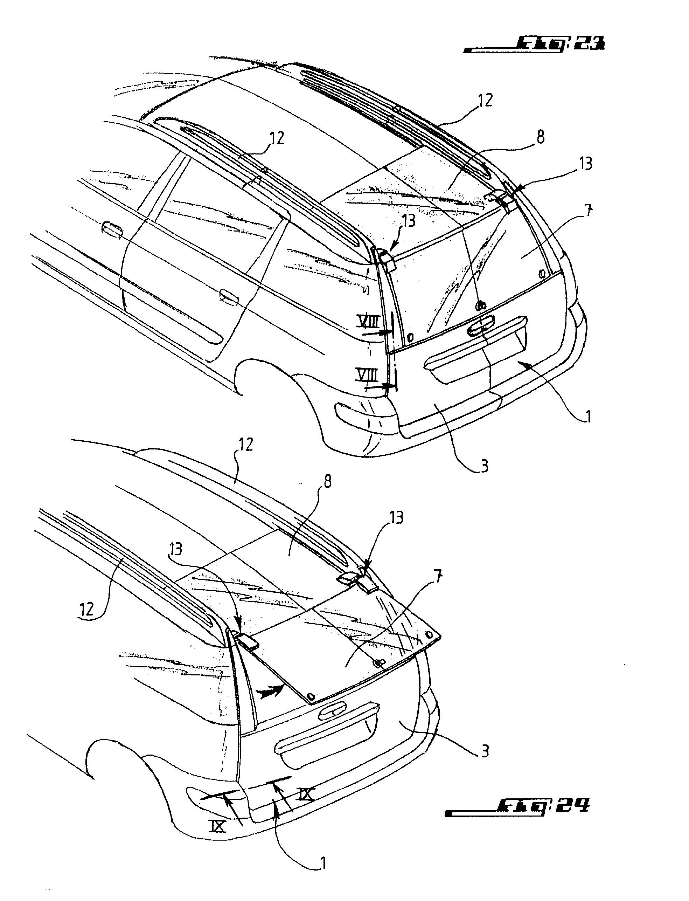

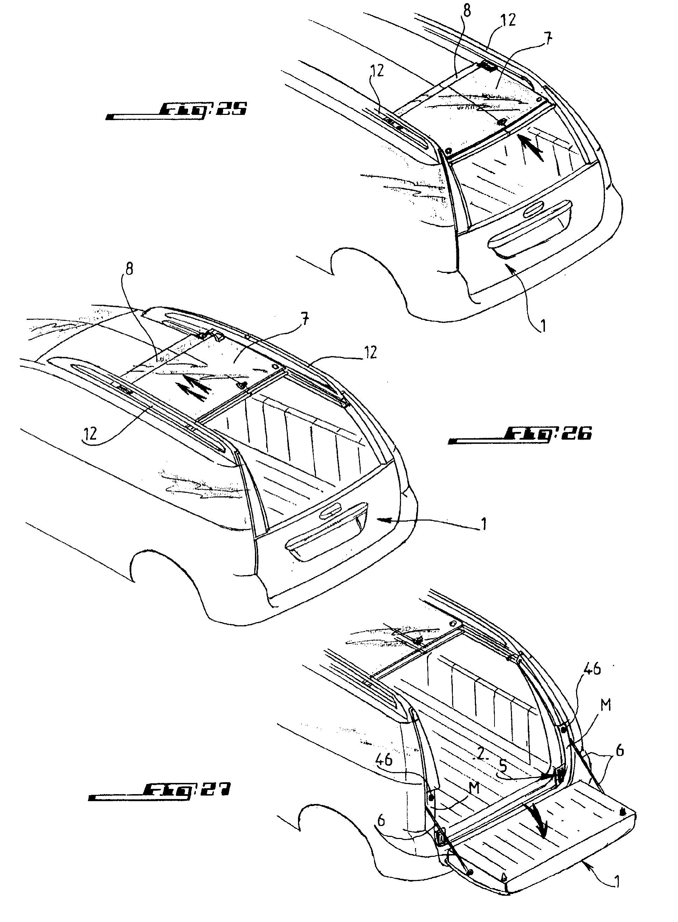

Comme cela ressort mieux notamment de la figure 13, chaque élément 16 de charnière d'articulation 13 est en forme de chape située au-dessus du côté latéral correspondant du panneau de toit ouvrant 8, la chape 16 comportant une patte latérale 19 externe au panneau 8 dont l'extrémité inférieure, se prolongeant en-dessous de ce panneau porte à rotation autour d'un axe transversal 20 solidaire de la patte 19 le galet de roulement 17. Le rail de guidage 18 de chaque galet de roulement 17 a une partie inférieure opposée au panneau 8 à section transversale sensiblement en forme de U dans laquelle peut se déplacer le galet 17 et la paroi latérale de ce rail raccordée à la partie inférieure en forme de U et opposée à la patte 19, se termine en partie supérieure par une paroi sensiblement à angle droit de fixation du rail 18 sous le panneau 8 par l'intermédiaire de boulons de fixation 21. Un joint de protection 22 est interposé entre la face supérieure du panneau de toit ouvrant 8 en contact glissant avec celle-ci et l'élément 16 de chaque charnière 13 en étant solidaire de cet élément 16. Chaque élément mobile 15 d'une charnière d'articulation 13 est fixé à la vitre 7 par au moins un goujon de fixation 23.

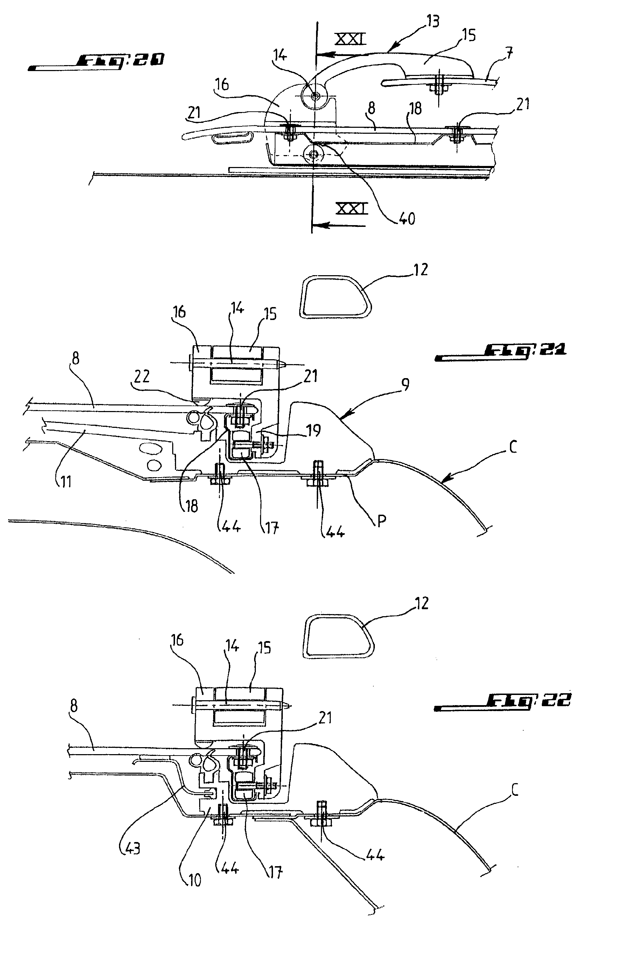

En position de fermeture de la vitre 7 au-dessus du volet fermé 1, l'étanchéité entre le bord transversal supérieur de la vitre 7 et le pavillon du véhicule est assurée par un joint transversal d'étanchéité 24 chaussé sur le bord transversal arrière du panneau 8 occupant sa position fermée du pavillon et fixé à une traverse 8a solidaire du panneau 8 sous celui-ci (figure 10).

Pour assurer le pivotement contrôlé en douceur de la vitre 7 de sa position de fermeture à sa position d'ouverture, deux vérins latéraux 25, de préférence du type à gaz, sont prévus, le cylindre 26 de chaque vérin 25 étant fixé de façon articulée à son extrémité à la caisse du véhicule tandis que la tige de piston 27 de ce vérin est fixée de façon articulée à son extrémité opposée à la vitre 7 par l'intermédiaire d'une pièce de support 28 fixée derrière la vitre 7 au voisinage de son coin correspondant opposé à la charnière d'articulation 13 par un boulon 29, un joint d'étanchéité 30 étant solidaire de la caisse C du véhicule au voisinage du montant correspondant à l'encadrement de l'ouverture du coffre arrière pour assurer l'étanchéité de la vitre 7 à sa position de fermeture le long de son côté latéral correspondant. Une butée de protection 28a est fixée à la pièce de support 28 et est en appui sur le panneau 8 lorsque la vitre 7 est en position sur le panneau 8.

La vitre 7 peut être verrouillée à sa position de fermeture, au volet arrière fermé 1 par un mécanisme de verrouillage déverrouillable, de préférence à distance, notamment par le conducteur.

Comme représenté en figure 11, ce mécanisme de verrouillage comprend un doigt de verrouillage 31 solidaire de la vitre 7 par l'intermédiaire d'un écrou 32 et d'une tige filetée 33 traversant perpendiculairement la vitre 7 au voisinage de son bord inférieur et au milieu de celui-ci. Une poignée externe de manoeuvre 34 est fixée par vissage sur la tige filetée 33 en étant bloquée en appui sur la face externe correspondante de la vitre 7. Le mécanisme de verrouillage comprend en outre un boîtier 35 fixé dans le volet arrière en partie supérieure de celui-ci entre le panneau externe 1 et la doublure 4 et un élément formant coulisseau 36 est monté mobile en translation rectiligne dans le boîtier 35 dans un sens de déverouillage du doigt 31 sous la commande d'un moteur électrique 37 fixé dans le volet 1 sur une partie de renfort 38 solidaire de la face interne de la doublure 4, le moteur électrique 37 étant relié au coulisseau 36 par une tringle métallique 39. Le moteur électrique 37 peut être commandé à distance par un organe d'actionnement, tel qu'un bouton poussoir, situé au tableau de bord du véhicule. Le doigt de verrouillage 31 traverse un perçage réalisé en partie supérieure du panneau externe 3 du volet 1 et s'engage transversalement dans le boîtier 35 pour être bloqué dans celui-ci, en position de fermeture de la vitre 7, par l'extrémité conformée à cet effet du coulisseau 36. Ainsi, lorsque le moteur électrique 37 est actionné, la tringle 39 déplace en translation le coulisseau 36 relativement au boîtier 35 dans un sens désengageant l'extrémité opposée du coulisseau 36 du doigt 31 pour libérer ce dernier et permettre à un utilisateur de faire pivoter manuellement la vitre 7 à sa position d'ouverture en tirant sur la poignée de manoeuvre 24. Un organe élastique, tel qu'un ressort hélicoïdal de traction (non représenté) peut être interposé entre le boîtier 35 et le coulisseau 26 pour rappeler ce dernier à sa position de verrouillage de façon qu'en introduisant à nouveau le doigt 31, ce dernier soit automatiquement bloqué dans le boîtier 35 par l'extrémité libre du coulisseau 36. Un joint transversal d'étanchéité 39 est fixé sur le rebord transversal supérieur du volet 1 pour assurer l'étanchéité entre la vitre 7 et le volet 1 et entre la doublure 4 et le panneau extérieur 1 de ce volet.

La vitre arrière 7 peut être automatiquement bloquée relativement aux rails de guidage 18 à sa position escamotée la plus avancée sur ces rails par des moyens de verrouillage permettant de retenir la vitre 7 relativement au pavillon lorsque le véhicule se déplace.

Ces moyens de verrouillage peuvent être constitués chacun par un organe du genre patin ou une partie conformée élastiquement déformable ou intégré à chaque rail 18 au-dessus du galet de roulement correspondant 17 vers l'extrémité avant du rail pour bloquer le volet 17 lorsqu'il contacte l'organe de verrouillage. Ainsi, lorsque l'élément 16 de chaque charnière 13 se déplace vers l'avant du véhicule relativement au rail correspondant 18, le galet de roulement 17 vient s'engager dans l'organe 40 pour son blocage relativement au rail 18. Cet organe de blocage pourrait présenter en section transversale la forme d'un grand V renversé dont les extrémités libres recourbées seront fixées, par exemple par soudage, sous une paroi supérieure correspondante du rail 18 de façon que le galet de roulement 17 puisse s'engager à force élastiquement entre les deux branches du V renversé de cet organe.

Les moyens de verrouillage 40 permettent au panneau de toit ouvrant 8, lorsque déplacé en translation relativement au pavillon vers l'avant du véhicule, d'entraîner également la vitre 7 vers cette position pour assurer la configuration en pick-up du véhicule.

Les figures 13, 16-19 et 22 représentent les moyens permettant le déplacement commandé en translation vers l'avant du véhicule, à partir de sa position de fermeture du pavillon, du panneau de toit ouvrant 8 relativement aux longerons 10 du cadre de toit ouvrant 9.

Ces moyens comprennent deux câbles latéraux 41 s'étendant longitudinalement au véhicule et pouvant coulisser de façon guidée respectivement le long des deux longerons 10 du cadre de toit ouvrant 9, une pièce d'entraînement 42 du panneau de toit ouvrant 8 étant solidaire d'une part de la traverse 8a du panneau 8 et d'autre part du câble correspondant 41. La pièce d'entraînement 42 présente en section transversale approximativement la forme d'un L dont la jambe verticale a son extrémité supérieure solidaire de la traverse 8a et l'autre jambe est conformée de façon à coulisser sur une coulisse de forme conjuguée 41a du longeron correspondant 10 vers l'avant ou l'arrière du véhicule suivant le sens de déplacement imposé au câble 41 par un moteur électrique 43 logé dans la caisse du véhicule et accouplé de façon appropriée aux câbles 41 qui coulissent chacun dans une partie formant fourreau longitudinal du longeron correspondant 10. Chaque pièce d'entraînement 42 est maintenue en appui sur la coulisse correspondant 41a par le câble associé 41 solidaire de l'extrémité libre de la jambe approximativement horizontale de la pièce 42. Pour assurer un guidage bilatéral du panneau de toit ouvrant 8 relativement au cadre de toit ouvrant 9, le panneau 8 comporte de chaque côté de celui-ci un guide latéral 43, qui peut être solidaire de la traverse 8a du panneau 8 et dont l'extrémité s'engage dans une rainure longitudinale du longeron correspondant 10.

Les moyens d'entraînement commandés du panneau du toit ouvrant 8 étant déjà connus, il n'ont pas à être davantage détaillés.

Le cadre de toit ouvrant 9 est fixé au pavillon par des vis de fixation 44 visibles notamment aux figures 21 et 22 et par collage au-dessus du logement de réception dans la caisse C du moteur 43, comme représenté notamment au figure 16, pour assurer sa fermeture. Le cadre du toit ouvrant 9 est pourvu d'un joint d'étanchéité 45 avec le panneau 8 et protégeant le moteur d'entraînement 43 du panneau de toit ouvrant 8. Un joint d'étanchéité J est prévu entre la partie avant du panneau 8 et le pavillon du véhicule en étant solidaire du panneau 8.

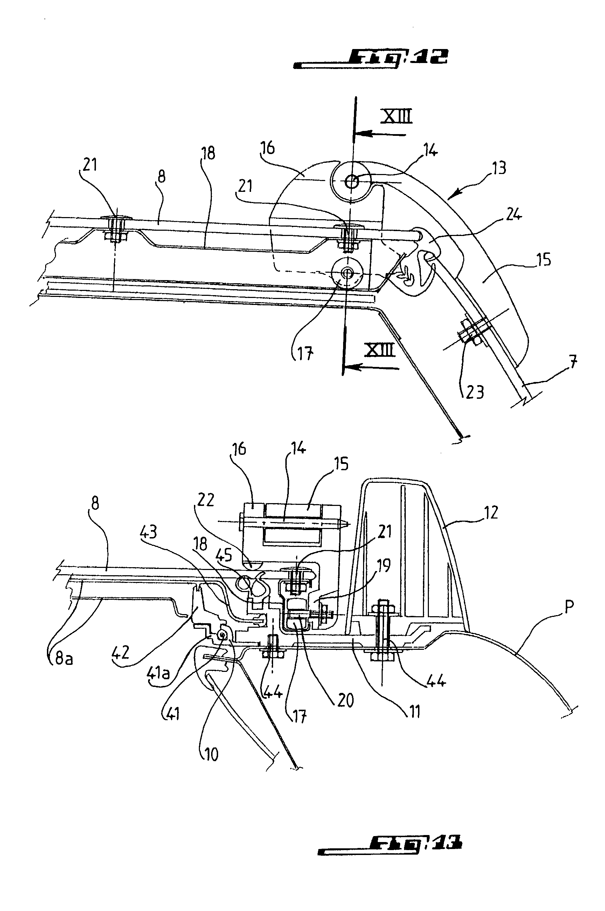

La figure 8 représente les moyens permettant de verrouiller le volet de coffre arrière 1 à sa position de fermeture.

Ces moyens comprennent un mécanisme de verrouillage déverrouillable comportant deux doigts de verrouillage 46 solidaires respectivement des deux montants d'encadrement M du coffre arrière du véhicule en faisant saillie à l'extérieur de ceux-ci et deux boîtiers de verrouillage 47 logés dans le volet 1 en étant solidaires de la face interne de la doublure 4 en partie supérieure de ce volet de façon à permettre aux deux doigts 46 de s'engager respectivement dans les deux boîtiers 47 au travers de perçages correspondants de la doublure 4 pour être chacun bloqué dans le boîtier 47 par un coulisseau 48 monté à déplacement commandé en translation dans le boîtier 47 par un moteur électrique 49 également logé dans le volet 1 en étant solidarisé à la face interne de la garniture 4. Le moteur électrique 49 est relié au coulisseau 48 par une tringle métallique 50 et peut être commandé par un organe d'actionnement, tel qu'un bouton poussoir, situé par exemple au tableau de bord du véhicule.

Chaque doigt de verrouillage 46 est fixé à la paroi du montant correspondant M par une tige filetée 51 solidaire du doigt 46, traversant cette paroi et fixé à celle-ci par deux écrous 52 bloqués de chaque côté de la paroi.

Le fonctionnement du dispositif formant volet de coffre arrière ressort déjà de la description qui en a été faite ci-dessus et va être maintenant expliqué en référence aux figures 23 à 27.

La figure 23 représente la configuration selon laquelle le volet arrière 1 est verrouillé à sa position de fermeture, la vitre 7 est verrouillée en position rabattue au volet 1 au-dessus de celui-ci et le panneau de toit ouvrant 8 est à sa position arrière de fermeture du pavillon du véhicule.

Lorsqu'un utilisateur souhaite déposer des objets dans le coffre arrière sans avoir à ouvrir le volet 1, il commande par l'organe d'actionnement approprié le moteur électrique 37 de façon à désengager le coulisseau 36 de sa position de verrouillage du doigt de verrouillage 31. Ensuite, l'utilisateur manoeuvre la poignée 34 pour faire pivoter la vitre 7 à sa position d'ouverture dite entrebaillée représentée en figure 24 et à laquelle la vitre 7 se trouve approximativement en prolongement du pavillon du véhicule. Le pivotement de la vitre 7 à sa position d'ouverture est assisté par les deux vérins à gaz 25.

La figure 25 représente le déplacement manuel par l'utilisateur du volet 7 de sa position d'ouverture de la figure 24 à une position escamotée, non en saillie en arrière du pavillon du véhicule, au-dessus du panneau de toit ouvrant 8. Lorsque le volet 7 arrive à sa position la plus en avant relativement aux deux rails de guidage 18, celui-ci est verrouillé à ces rails par les deux galets de roulement 17 autobloqués dans leurs organes de verrouillage respectifs 40.

Si l'utilisateur souhaite configurer le véhicule en pick-up, il actionne le moteur électrique 43 d'entraînement des câbles 41 pour déplacer vers l'avant du véhicule le panneau de toit ouvrant 8 ainsi que la vitre 7 verrouillée à ce panneau jusqu'à la position la plus en avant du véhicule représentée en figure 26.

La figure 27 représente le volet arrière 1 à sa position basculée en prolongement du plancher 2 du coffre arrière après avoir actionné le moteur électrique 49 pour qu'il commande le déplacement de chaque coulisseau 48 à sa position de déverrouillage du doigt du verrouillage 46 associé pour permettre à l'utilisateur d'amener manuellement le volet 1 en position d'ouverture du coffre arrière.

## Revendications

1. Dispositif formant volet de coffre arrière d'un véhicule automobile, selon lequel une vitre arrière peut être disposée au-dessus du volet arrière sensiblement en prolongement de ce volet occupant sa position de fermeture du coffre arrière, **caractérisé en ce que** la vitre arrière (7) est montée pivotante à la partie arrière du pavillon du véhicule suivant un axe transversal à ce dernier à l'opposé du volet (1) et peut pivoter entre sa position de fermeture du coffre arrière en prolongement du volet fermé (1) et une position d'ouverture approximativement en prolongement du pavillon permettant de libérer l'espace au-dessus du volet fermé (1) pour accéder au coffre arrière, la vitre arrière (7) peut coulisser de façon guidée en translation le long du pavillon au-dessus de celui-ci vers l'avant du véhicule à partir de sa position d'ouverture jusqu'à une position rangée escamotée non en saillie de l'arrière du véhicule, et la vitre arrière (7) est montée pivotante au pavillon par l'intermédiaire de deux charnières d'articulation (13) situées de chaque côté de la vitre (7) et dont les axes d'articulation (14) sont coaxiaux transversalement au véhicule, l'élément mobile (15) de chaque charnière (13) étant fixé à la vitre (7) au voisinage de son bord opposé au volet arrière (1) tandis que l'élément fixe (16) de la charnière (13) est équipé d'un galet de roulement (17) logé dans un rail de guidage longitudinal latéral (18) du pavillon pour permettre le coulissement bilatéralement guidé de la vitre arrière (7) le long des rails de guidage (18).

2. Dispositif selon la revendication 1, **caractérisé en ce que** la vitre arrière (7) peut être bloquée relativement aux rails de guidage (18) à sa position escamotée la plus avancée sur les rails (18) par des moyens de verrouillage automatique (40).

3. Dispositif selon la revendication 2, **caractérisé en ce que** le pavillon est équipé d'un panneau arrière de toit ouvrant (8) à déplacement commandé en translation et bilatéralement guidé relativement au pavillon entre une position fermée du pavillon et une position avancée sur le pavillon d'ouverture de la partie arrière du pavillon et **en ce que** les rails de guidage (18) de la vitre arrière (7) sont fixés de chaque côté du panneau arrière de toit ouvrant (8) sous celui-ci pour permettre à la vitre arrière (7) de coulisser relativement au panneau (8) au-dessus de celui-ci à partir de la position d'ouverture de la vitre (7) lorsque le panneau (8) occupe sa position de fermeture du pavillon jusqu'à ce que la vitre arrière (7) soit bloquée relativement au panneau (8) à sa position avancée au-dessus de celui-ci par les moyens de verrouillage automatique (40).

4. Dispositif selon la revendication 3, **caractérisé en ce que** le panneau de toit ouvrant (8) entraîne cinématiquement la vitre arrière (7) vers l'avant du véhicule en position verrouillée de la vitre (7) relativement au panneau (8) lorsque ce dernier est déplacé à sa position avancée d'ouverture de la partie arrière du pavillon pour configurer partiellement le véhicule en pick-up.

5. Dispositif selon la revendication 3 ou 4, **caractérisé en ce que** le panneau arrière de toit ouvrant (8) est monté bilatéralement guidé sur un cadre (9) à longerons latéraux de guidage (10) solidaire du pavillon.

6. Dispositif selon l'une des revendications 3 à 5, **caractérisé en ce que** l'élément fixe (16) de chaque charnière d'articulation (13) de la vitre arrière (7) est en forme de chape située au-dessus du panneau arrière de toit ouvrant (8) et qui comporte une patte latérale (19) externe au panneau (8) à l'extrémité inférieure de laquelle est montée à rotation le galet de roulement (17) logé dans son rail de guidage (18) en-dessous du panneau de toit ouvrant (8).

7. Dispositif selon l'une des revendications précédentes, **caractérisé en ce que** la vitre arrière (7) peut être verrouillée à sa position de fermeture au volet arrière fermé (1) par un mécanisme de verrouillage déverrouillable comprenant un doigt de verrouillage (31) solidaire de la vitre (7) en traversant celle-ci et un boîtier de verrouillage (35) fixé dans le volet arrière (1) et dans lequel peut s'engager le doigt de verrouillage (31) pour y être bloqué par un coulisseau (36) à déplacement commandé dans le boîtier (35) par un moteur électrique (37) logé dans le volet arrière (1).

8. Dispositif selon la revendication 7, **caractérisé en ce que** le doigt de verrouillage (31) est solidaire à son extrémité opposée d'une poignée externe de manoeuvre (34) située au voisinage du bord inférieur de la vitre arrière (7) sensiblement au milieu de celle-ci.

9. Dispositif selon l'une des revendications précédentes, **caractérisé en ce que** le volet arrière (1) est monté articulé à son bord inférieur à la caisse du véhicule par deux charnières espacées (5) dont les axes d'articulation (5c) sont coaxiaux et transversaux à l'axe longitudinal du véhicule pour permettre au volet (1) de basculer à sa position d'ouverture approximativement en prolongement du plancher (2) du véhicule lorsque la vitre arrière (7) est au moins à sa position d'ouverture.

10. Dispositif selon la revendication 9, **caractérisé en ce que** le volet arrière (1) peut être verrouillé à sa position de fermeture à la caisse du véhicule par un mécanisme de verrouillage déverrouillable comprenant deux doigts de verrouillage (46) solidaires respectivement des deux montants (M) de la caisse du véhicule délimitant l'ouverture du coffre arrière en faisant saillie de ceux-ci et deux boîtiers de verrouillage (47) fixés dans le volet arrière (1) de chaque côté de celui-ci à sa partie supérieure opposée à l'articulation du volet (1) et dans chacun desquels peut s'engager un doigt de verrouillage (46) pour y être bloqué par un coulisseau (48) à déplacement commandé dans le boîtier (47) par un moteur électrique (49) logé dans le volet arrière (1).

11. Dispositif selon l'une des revendications précédentes, **caractérisé en ce que** deux vérins latéraux à gaz (25) sont montés articulés entre la caisse du véhicule et la vitre arrière (7) à ses extrémités opposées à son articulation au pavillon pour permettre le pivotement assisté de la vitre (7) à sa position d'ouverture en prolongement du pavillon.

12. Dispositif selon l'une des revendications 3 à 11, **caractérisé en ce que** le panneau arrière de toit ouvrant (8) est déplaçable le long du pavillon par un moteur électrique (43) commandé à distance et relié au panneau (8) par des moyens d'entraînement.
